# EUROPÄISCHE PATENTSCHRIFT

(11) **EP 1 723 457 B1**
(45) Veröffentlichungstag und Bekanntmachung des Hinweises auf die Patenterteilung: **12.12.2007**
(21) Anmeldenummer: 05701234.6
(22) Anmeldetag: 28.01.2005
(51) Int. Cl.: G02B 6/44, G02B 6/50

(54) **KABELEINFÜHRVORRICHTUNG EINER VERTEILEREINRICHTUNG FÜR LICHTWELLENLEITERKABEL UND VERTEILEREINRICHTUNG MIT EINER KABELEINFÜHRVORRICHTUNG**
CABLE INSERTION DEVICE IN AN OPTICAL FIBRE DISTRIBUTOR AND DISTRIBUTOR WITH A CABLE INSERTION DEVICE
DISPOSITIF D'INSERTION DE CABLE D'UN DISPOSITIF DE DISTRIBUTION POUR CABLES A FIBRES OPTIQUES, ET DISPOSITIF DE DISTRIBUTION DOTE D'UN DISPOSITIF D'INSERTION DE CABLE

(30) Priorität: 11.03.2004 DE 202004003962 U
(43) Veröffentlichungstag der Anmeldung: 22.11.2006
(73) Patentinhaber: CCS Technology, Inc., Wilmington, DE 19803 (US)
(72) Erfinder: MÜLLER, Michael, 58706 Menden (DE)
(74) Vertreter: Sturm, Christoph
(86) Internationale Anmeldenummer: PCT/EP2005/000846
(87) Internationale Veröffentlichungsnummer: WO 2005/088374

(56) Entgegenhaltungen:
- FR-A- 2 563 385
- US-A- 4 795 230
- US-A- 6 150 608

## Beschreibung

Die vorliegende Erfindung betrifft eine Kabeleinführvorrichtung einer Verteilereinrichtung für Lichtwellenleiterkabel gemäß dem Oberbegriff des Anspruchs 1. Des weiteren betrifft die Erfindung eine Verteilereinrichtung mit einer derartigen Kabeleinführvorrichtung gemäß dem Oberbegriff des Anspruchs 9.

Beim Aufbau von Lichtwellenleiterkabel-Netzwerken werden Verteilereinrichtungen zur Handhabung von Lichtwellenleiterkabein und von in den Lichtwellenleiterkabeln geführten Lichtwellenleitern für die Gewährleistung einer strukturierten Verkabelung benötigt. Bei derartigen Verteilereinrichtungen kann es sich zum Beispiel um Verteilerschränke oder Wandverteiler oder auch Kabelmuffen handeln.

Eine Anforderung, die an solche Verteilereinrichtungen gestellt wird, ist eine maximale Bestückung derselben bei hoher Packungsdichte und gleichzeitiger geringfügiger mechanischer Beanspruchung der Lichtwellenleiterkabel und der in den Lichtwellenleiterkabeln geführten Lichtwellenleiter. Die in solchen Verteilereinrichtungen handzuhabenden Lichtwellenleiter müssen stressfrei über die Lichtwellenleiterkabel an die Verteilereinrichtungen herangeführt, in dieselbe eingeführt sowie aus derselben herausgeführt werden, wobei im Bereich einer Einführstelle bzw. einer Ausführstelle der Lichtwellenleiterkabel in die bzw. aus der Verteilereinrichtung sogenannte Kabeleinführvorrichtungen zum Einsatz kommen.

Eine Kabeleinführvorrichtung gemäß dem Oberbegriff des Anspruchs 1 ist aus der US-A-6 150 608 bekannt. Hinsichtlich weiteren Standes der Technik wird verwiesen auf US-A-4 795 230 und FR-A-2 563 385.

Hiervon ausgehend liegt der vorliegenden Erfindung das Problem zu Grunde, eine neuartige Kabeleinführvorrichtung einer Verteilereinrichtung zu schaffen. Dieses Problem wird durch eine Kabeleinführvorrichtung mit den Merkmalen des Anspruchs 1 gelöst. Erfindungsgemäß weisen der Grundkörper und der Dichtkörper und eine Druckscheibe des Druckkörpers jeweils eine mittige Öffnung auf, wobei der Grundkörper und der Dichtkörper und die Druckscheibe radial außen anschließend an die jeweilige Öffnung mehrere schlitzartige Kammern zur Aufnahme jeweils eines Lichtwellenleiterkabels aufweisen, wobei die Kammern in die mittige Öffnung münden.

Mit der erfindungsgemäßen Kabeleinführvorrichtung ist es möglich, gleichzeitig mehrere Lichtwellenleiterkabel in einer einzigen Kabeleinführvorrichtung zu führen, wobei dann, wenn eines dieser Lichtwellenleiterkabel zum Beispiel zur Ausführung von Installationsarbeiten oder Wartungsarbeiten bewegt werden muss, die übrigen Lichtwellenleiterkabel hiervon unbeeinflusst bleiben. Mit der erfindungsgemäßen Kabeleinführvorrichtung ist es demnach möglich, an einzelnen in der Kabeleinführvorrichtung geführten Lichtwellenleiterkabeln gezielt Arbeiten vorzunehmen und gleichzeitig dafür Sorge zu tragen, dass die übrigen Lichtwellenleiterkabel hiervon nicht beeinflusst werden. Dies erhöht einerseits die Sicherheit bei der Handhabung der Kabel und reduziert andererseits die mechanischen Belastungen auf die Lichtwellenleiter, die in den Lichtwellenleiterkabeln geführt sind.

Nach einer bevorzugten Weiterbildung der Erfindung weist der Druckkörper einen mehrteiligen Aufbau auf, zumindest umfassend die Druckscheibe, einen Druckstopfen und eine Druckmutter. Der Grundkörper, der Dichtkörper und die Druckscheibe des Druckkörpers verfügen jeweils über die mittigen Öffnungen, wobei radial außen anschließend an die jeweilige Öffnung der Grundkörper, der Dichtkörper und die Druckscheibe jeweils mehrere schlitzartige Kammern zur Aufnahme jeweils eines Lichtwellenleiterkabels aufweisen, und wobei die Kammern in die mittige Öffnung münden.

In zusammengebautem Zustand ist der Dichtkörper zwischen dem Grundkörper und der Druckscheibe positioniert, und die Druckmutter ist derart mit dem Grundkörper verschraubt, dass der Druckstopfen über die Druckscheibe einen Druck auf den Dichtkörper ausübt, sodass sich der Dichtkörper verformt und so eine Abdichtung der Kabeleinführvorrichtung sowie eine Zugentlastung der Lichtwellenleiterkabel erzielt wird.

Bevorzugte Weiterbildungen der Erfindung ergeben sich aus den Unteransprüchen und der nachfolgenden Beschreibung. Ein Ausführungsbeispiel wird, ohne hierauf beschränkt zu sein, anhand der Zeichnung näher erläutert. In der Zeichnung zeigt:
- Fig. 1:: eine erfindungsgemäße Kabeleinführvorrichtung für Lichtwellenleiterkabel in einer perspektivischen Explosionsdarstellung;
- Fig. 2:: die erfindungsgemäße Kabeleinführvorrichtung gemäß Fig. 1 zusammen mit vorkonfektionierten Lichtwellenleiterkabeln in einer Darstellung analog zu Fig. 1;
- Fig. 3:: die erfindungsgemäße Kabeleinführvorrichtung gemäß Fig. 1 zusammen mit vorkonfektionierten Lichtwellenleiterkabeln in einer perspektivischen Zusammenbaudarstellung;
- Fig. 4:: einen Grundkörper der erfindungsgemäßen Kabeleinführvorrichtung in perspektivischer Alleindarstellung;
- Fig. 5:: einen Dichtkörper der erfindungsgemäßen Kabeleinführvorrichtung in perspektivischer Alleindarstellung; und
- Fig. 6:: eine Druckscheibe eines Druckkörpers der erfindungsgemäßen Kabeleinführvorrichtung in perspektivischer Alleindarstellung.

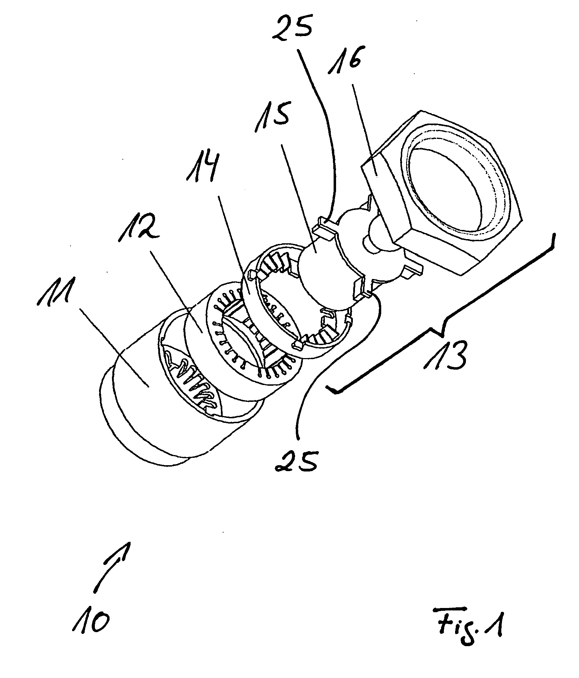

Nachfolgend wird ein Ausführungsbeispiel einer erfindungsgemäßen Kabeleinführvorrichtung unter Bezugnahme auf Fig. 1 bis 6 in größerem Detail beschrieben.

Eine erfindungsgemäße Kabeleinführvorrichtung 10 verfügt über einen mehrteiligen Aufbau und umfasst zumindest einen Grundkörper 11, einen Dichtkörper 12 sowie einen Druckkörper 13. Gemäß Fig. 1 ist der Druckkörper 13 aus drei Baugruppen gebildet, nämlich aus einer Druckscheibe 14, einem Druckstopfen 15 und einer Druckmutter 16. Der Grundkörper 11, die Druckscheibe 14, der Druckstopfen 15 sowie die Druckmutter 16 sind aus einem relativ steifen, nichtelastischen Material gefertigt. Der Dichtkörper 12 hingegen ist aus einem verformbaren und damit elastischen Werkstoff hergestellt.

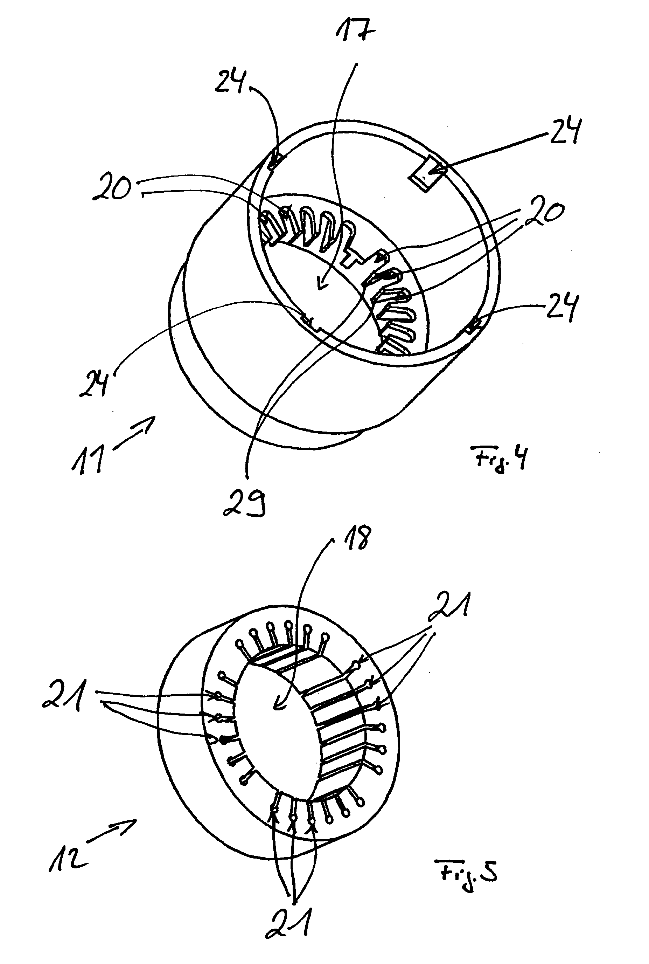

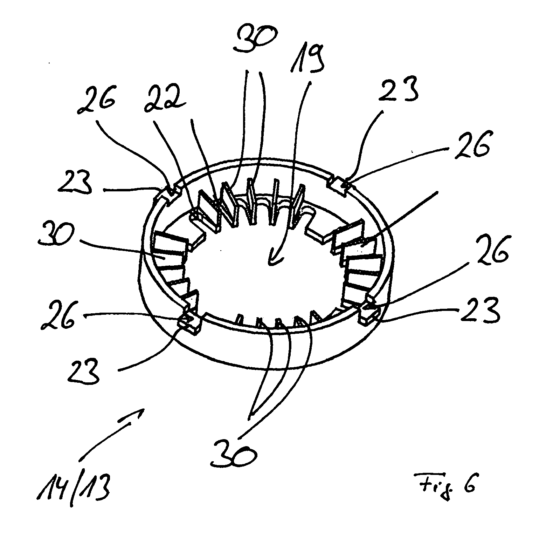

Der Grundkörper 11 (siehe Fig.4), der Dichtkörper 12 (siehe Fig. 5) sowie die Druckscheibe 14 (siehe Fig. 6) des Druckkörpers 13 verfügen jeweils über eine mittige Öffnung 17, 18 bzw. 19. Durch diese mittigen Öffnungen 17, 18 bzw. 19 von Grundkörper 11, Dichtkörper 12 bzw. Druckscheibe 14 sind mehrere Lichtwellenleiterkabel führbar. An die Öffnungen 17, 18 und 19 von Grundkörper 11, Dichtkörper 12 sowie Druckscheibe 14 schließen sich jeweils radial außen schlitzartige Kammern 20, 21 bzw. 22 an. Die schlitzartigen Kammern 20, 21 bzw. 22 münden jeweils in die mittige Öffnung 17, 18 bzw. 19. Jede der schlitzartigen Kammern 20, 21 bzw. 22 dient der Aufnahme eines Lichtwellenleiterkabels mit darin geführten Lichtwellenleitern. Bei den geführten Lichtwellenleitekabeln handelt es sich insbesondere um vorkonfektionierte Patchkabel. Jedes Lichtwellenleiterkabel wird demnach in dem separaten Kammern 20, 21 und 22 von Grundkörper 11, Dichtkörper 12 und Druckscheibe 14 geführt und kann zur Ausführung von Installationsarbeiten individuell und unabhängig von den anderen Lichtwellenleiterkabeln aus den schlitzförmigen Kammern 20, 21 und 22 herausgeführt und in die mittigen Öffnungen 17, 18 bzw. 19 einführt werden.

Insofern ist jedes Lichtwellenleiterkabel unabhängig von den anderen Lichtwellenleiterkabeln geführt und unabhängig von den anderen Lichtwellenleiterkabeln handhabbar.

Wie insbesondere Fig. 1 entnommen werden kann, ist in einem zusammengebauten Zustand der Kabeleinführvorrichtung 10 der Dichtkörper 12 zwischen dem Grundkörper 11 und der Druckscheibe 14 des Druckkörpers 13 positioniert. In diesem zusammengebauten Zustand greift die Druckscheibe 14 mit in radialer Richtung vorstehenden Nasen bzw. Vorsprüngen 23 in Ausnehmungen 24 innerhalb des Grundkörpers 11 ein. Die Ausnehmungen 24 des Grundkörpers 11 sind einer Innenwand des Grundkörpers 11 zugeordnet. Auf diese Art und Weise wird ein Verdrehschutz zwischen dem Grundkörper 11 und der Druckscheibe 14 des Druckkörpers 13 bereitgestellt. Im zusammengebauten Zustand sind die Kammern 20, 21 und 22 von Grundkörper 11, Dichtkörper 12 und Druckscheibe 14 zueinander fluchtend ausgerichtet, so dass ein handzuhabendes Lichtwellenleiterkabel gleichzeitig in einer Kammer 20 des Grundkörpers, in einer Kammer 21 des Dichtkörpers 12 und in einer Kammer 22 der Druckscheibe 14 geführt ist. Ebenso fluchten im zusammengebauten Zustand die Öffnungen 17, 18 und 19 von Grundkörper 11, Dichtkörper 12 und Druckscheibe 14.

Wie insbesondere Fig. 1 entnommen werden kann, greift der Druckstopfen 15 in zusammengebautem Zustand der erfindungsgemäßen Kabeleinführvorrichtung 10 in die Öffnungen 17, 18 und 19 von Grundkörper 11, Dichtkörper 12 sowie Druckscheibe 14 ein. Weiterhin greift der Druckstopfen 15 mit radial vorstehenden Vorsprüngen 25 in Ausnehmungen 26 im Bereich der Druckscheibe 14 ein, um so wiederum einen Verdrehschutz zu gewährleisten. Wie insbesondere Fig. 6 entnommen werden kann, sind die Vorsprünge 23 der Druckscheibe 14, die in die Ausnehmungen 24 des Grundkörpers 11 eingreifen, sowie die Ausnehmungen 26 der Druckscheibe 14, in welche die Vorsprünge 25 des Druckstopfens 15 eingreifen, unmittelbar benachbart zueinander positioniert. Da in montiertem Zustand alle in der Kabeleinführvorrichtung 10 geführten Lichtwellenleiterkabel aus den mittigen Öffnungen 17, 18 bzw. 19 herausbewegt und in die schlitzartigen Kammern 20, 21 bzw. 22 eingeführt sind, ist der Außendurchmesser des Druckstopfens 15 an den Innendurchmesser der Öffnungen 17, 18 bzw. 19 angepasst.

In zusammengebautem Zustand der erfindungsgemäßen Kabeleinführvorrichtung 10 wirkt des weiteren ein nicht-dargestelltes Innengewinde der Druckmutter 16 mit einem ebenfalls nicht-dargestellten Außengewinde des Grundkörpers 11 zusammen. Durch zunehmendes Verschrauben von Druckmutter 16 sowie Grundkörper 11 wird ein zunehmender Druck auf den Drucksstopfen 15 und damit die Druckscheibe 14 und den Dichtkörper 12 ausgeübt. Dabei verformt sich der elastische Dichtkörper 12 und wird gegen die innere Wand des Grundkörpers 11 gedrückt. Durch die sich dabei ausbildende Zwangsverformung des Dichtkörpers 12 wird die gesamte Kabeleinführvorrichtung 10 abgedichtet und die in der Kabeleinführvorrichtung 10 geführten Lichtwellenleiterkabel werden zugentlastet.

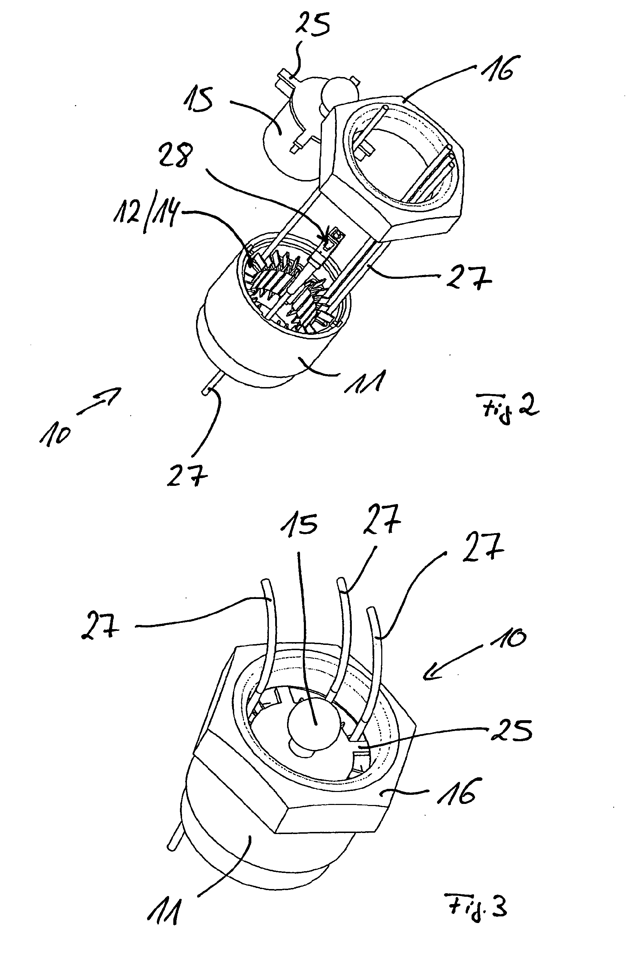

Fig. 3 zeigt die erfindungsgemäße Kabeleinführvorrichtung 10 in zusammengebautem Zustand. Wie Fig. 3 entnommen werden kann, geben in zusammengebautem Zustand der Druckstopfen 15 sowie die Druckmutter 16 die fluchtend zueinander ausgerichteten Kammern 20, 21 sowie 22 von Grundkörper 11, Dichtkörper 12 sowie Druckscheibe 14 frei, sodass die in den Kammern 20, 21 und 22 geführten Lichtwellenleiterkabel seitlich an dem Druckstopfen 15 vorbei und durch die Druckmutter 16 hindurchgeführt werden können. Fig. 3 zeigt insgesamt drei Lichtwellenleiterkabel 27, wobei in jedem dieser Lichtwellenleiterkabel 27 vorzugsweise ein Lichtwellenleiter geführt ist. Wie Fig. 2 entnommen werden kann, handelt es sich bei diesen Lichtwellenleiterkabein 27 insbesondere um vorkonfektionierte Lichtwellenleiterkabel, insbesondere um sogenannte Patchkabel, die bereits mit einer entsprechenden Steckereinrichtung 28 ausgerüstet sind.

Soll nun zum Beispiel an den Lichtwellenleiterkabeln 27 eine Installationsarbeit durchgeführt werden, so wird die Verschraubung zwischen Grundkörper 11 sowie Druckmutter 16 gelöst, die Druckmutter 16 wird vom Grundkörper 11 abgehoben und der Druckstopfen 15 wird im Sinne der Fig. 2 aus der Anordnung herausgenommen. Hierdurch werden die Öffnungen 17, 18 bzw. 19 freigegeben und die in den Kammern 20, 21 bzw. 22 aufgenommenen Lichtwellenleiterkabel 27 können einzeln aus den Kammern 20, 21 bzw. 22 herausgeführt und in die mittige Öffnung 17, 18 bzw. 19 geschoben werden. Die aus den Kammern 20, 21 bzw. 22 herausgeführten Lichtwellenleiterkabel 27 sind innerhalb der Öffnungen 17, 18 bzw. 19 frei verschiebbar, sodass die Installationsarbeiten ausgeführt werden können. Bei Herausführung eines Lichtwellenleiterkabels 27 aus einer entsprechenden Kammer bleiben die übrigen Lichtwellenleiterkabel 27 unbeeinflusst.

Die erfindungsgemäße Kabeleinführvorrichtung 10 eignet sich bevorzugt zur Verwendung an Wandverteilern. Die Kabeleinführvorrichtung 10 ist dann am Wandverteiler über den Grundkörper 11 befestigt, vorzugsweise ist der Grundkörper 11 mit einem Gehäuse des Wandverteilers verschraubt. Der Grundkörper 11 kann auch integraler Bestandteil des Wandverteilers, insbesondere des Gehäuses desselben, sein. In den Wandverteiler einzuführende bzw. aus demselben herauszuführende Lichtwellenleiterkabel können in der erfindungsgemäßen Kabeleinführvorrichtung unabhängig voneinander geführt sowie gegenüber Zugbelastung abgefangen werden. Weiterhin sind zur Durchführung von Installationsarbeiten einzelne Lichtwellenleiterkabel separat handhabbar, ohne die übrigen in der erfindungsgemäßen Kabeleinführvorrichtung geführten Lichtwellenleiterkabel zu beeinflussen.

Im gezeigten Ausführungsbeispiel sind in den Grundkörper 11, den Dichtkörper 12 sowie die Druckscheibe 14 jeweils vierundzwanzig schlitzartige Kammern 20, 21 bzw. 22 eingebracht. Im gezeigten Ausführungsbeispiel können demnach vierundzwanzig Lichtwellenleiterkabel unabhängig voneinander in der erfindungsgemäßen Kabeleinführvorrichtung 10 geführt und gehandhabt werden.

Wie insbesondere Fig. 4 und 6 entnommen werden kann, verlaufen zwischen den einzelnen schlitzartigen Kammern 20 bzw. 22 von Grundkörper 11 sowie Druckscheibe 14 Versteifungsstege 29 bzw. 30. Die Versteifungssteges 29 bzw. 30 stabilisieren die Form von Grundkörper 11 sowie Druckscheibe 14.

### Bezugszeichenliste

- 10: Kabeleinführvorrichtung
- 11: Grundkörper
- 12: Dichtkörper
- 13: Druckkörper
- 14: Duckscheibe
- 15: Druckstopfen
- 16: Druckmutter
- 17: Öffnung
- 18: Öffnung
- 19: Öffnung
- 20: Kammer
- 21: Kammer
- 22: Kammer
- 23: Vorsprung
- 24: Ausnehmung
- 25: Vorsprung
- 26: Ausnehmung
- 27: Lichtwellenleiterkabel
- 28: Steckereinrichtung
- 29: Versteifungssteg
- 30: Versteifungssteg

## Patentansprüche

1. Kabeleinführvorrichtung einer Verteilereinrichtung für Lichtwellenleiterkabel, um Lichtwellenleiterkabel mit in denselben geführten Lichtwellenleitern in die Verteilereinrichtung einzuführen bzw. aus derselben herauszuführen, mit einem mehrteiligen Aufbau zumindest umfassend einen Grundkörper (11), einen Dichtkörper (12) und einen Druckkörper (13), wobei der Grundkörper (11) und der Dichtkörper (12) und der Druckkörper (13) axial angeordnet sind und derart ausgebildet sind, dass in der Kabeleinführvorrichtung mehrere Lichtwellenleiterkabel (27) unabhängig voneinander derart handhabbar sind, dass bei Handhabung eines der Lichtwellenleiterkabel die anderen Lichtwellenleiterkabel unbeeinflusst bleiben, **dadurch gekennzeichnet, dass** der Grundkörper (11) und der Dichtkörper (12) und eine Druckscheibe (14) des Druckkörpers (13) jeweils eine mittige Öffnung (17, 18, 19) aufweisen, und dass der Grundkörper (11) und der Dichtkörper (12) und die Druckscheibe (14) radial außen anschließend an die jeweilige Öffnung (17, 18, 19) mehrere schlitzartige Kammern (20, 21, 22) zur Aufnahme jeweils eines Lichtwellenleiterkabels (27) aufweisen, wobei die Kammern (20, 21, 22) in die mittige Öffnung (17, 18, 19) münden, so dass die in den Kammern (20, 21, 22) aufgenommenen Lichtwellenleiterkabel (27) zur Durchführung von Installationsarbeiten einzeln aus den Kammern (20, 21, 22) herausgeführt und in die mittige Öffnung (17, 18, 19) geschoben werden können.

2. Kabeleinführvorrichtung nach Anspruch 1, **dadurch gekennzeichnet, dass** der Druckkörper (13) einen mehrteiligen Aufbau aufweist, zumindest umfassend eine Druckscheibe (14), einen Druckstopfen (15) und eine Druckmutter (16).

3. Kabeleinführvorrichtung nach Anspruch 1 oder 2, **dadurch gekennzeichnet, dass** ein Druckstopfen (15) des Druckkörpers (13) in die mittige Öffnung (17, 18, 19) von Druckscheibe (14), Dichtkörper (12) und vorzugsweise auch Grundkörper (11) einführbar ist.

4. Kabeleinführvorrichtung nach einem oder mehreren der Ansprüche 2 bis 4, **dadurch gekennzeichnet, dass** der Druckmutter (16) des Druckkörpers (13) ein Innengewinde zugeordnet ist, welches mit einem dem Grundkörper (11) zugeordneten Außengewinde zusammenwirkt.

5. Kabeleinführvorrichtung nach Anspruch 4, **dadurch gekennzeichnet, dass** die Druckmutter (16) des Druckkörpers (13) derart mit dem Grundkörper (11) verschraubbar ist, dass mit zunehmender Verschraubung der Druckstopfen (15) über die Druckscheibe (14) einen zunehmenden Druck auf den Dichtkörper (12) ausübt, sodass der Dichtkörper (12) verformt wird und so eine Abdichtung der Kabeleinführvorrichtung und eine Zugentlastung der Lichtwellenleiterkabel bereitstellt.

6. Kabeleinführvorrichtung nach einem oder mehreren der Ansprüche 1 bis 5, **dadurch gekennzeichnet, dass** der Grundkörper (11) an einer innenliegenden Wand Ausnehmungen (24) aufweist, in welche in zusammengebautem Zustand die Druckscheibe (14) des Druckkörpers (13) zur Bereitstellung eines Verdrehschutzes mit entsprechenden Vorsprüngen (23) eingreift, wobei in zusammengebautem Zustand der Dichtkörper (12) zwischen dem Grundkörper (11) und der Druckscheibe (14) positioniert ist.

7. Kabeleinführvorrichtung nach einem oder mehreren der Ansprüche 1 bis 6, **dadurch gekennzeichnet, dass** die Druckscheibe (14) des Druckkörpers (13) Ausnehmungen (26) aufweist, in welche in zusammengebautem Zustand der Druckstopfen (15) des Druckkörpers (13) mit entsprechenden Vorsprüngen (25) zur Bereitstellung eines Verdrehschutzes eingreift.

8. Kabeleinführvorrichtung nach einem oder mehreren der Ansprüche 1 bis 7, **dadurch gekennzeichnet, dass** in zusammengebautem Zustand der Druckstopfen (15) und die Druckmutter (16) die von dem Grundkörper (11), dem Dichtkörper (12) und der Druckscheibe (14) begrenzten Kammern (17, 18, 19) derart freigeben, dass die in den Kammern (17, 18, 19) aufgenommenen Lichtwellenleiterkabel (17) seitlich neben dem Druckstopfen (15) vorbeiführbar sind.

9. Verteilereinrichtung für Lichtwellenleiterkabel bzw. für in den Lichtwellenleiterkabeln geführte Lichtwellenleiter, insbesondere Wandverteiler, mit mindestens einer Kabeleinführvorrichtung, um Lichtwellenleiterkabel mit in denselben geführten Lichtwellenleitern in die Verteilereinrichtung einzuführen bzw. aus derselben herauszuführen, **dadurch gekennzeichnet, dass** die oder jede Kabeleinführvorrichtung (10) nach einem oder mehreren der Ansprüche 1 bis 8 ausgebildet ist.

## Claims

1. Cable insertion device in a distributor device for optical fibre cables for inserting optical fibre cables with optical waveguides guided therein into the distributor device and leading them out of the same, having a multi-component design comprising at least one base element (11), one sealing element (12) and one pressure element (13), wherein the base element (11) and the sealing element (12) and the base element (13) are arranged axially and embodied in such a way that a plurality of optical fibre cables (27) can be handled independently of each other in the cable insertion device in such that when one of the optical fibre cables is being handled the other optical fibre cables remain unaffected, **characterized in that** the base element (11) and the sealing element (12) and a pressure plate (14) of the pressure element (13) each have a central opening (17, 18, 19), and **in that** the base element (11) and the sealing element (12) and the pressure plate (14) have, radially outwardly adjacent to the respective opening (17, 18, 19) a plurality of slit-like chambers (20, 21, 22) for receiving in each case an optical fibre cable (27), wherein the chambers (20, 21, 22) open into the central opening (17, 18, 19) so that the optical fibre cables (27), which are accommodated in the chambers (20, 21, 22), can be led out individually from the chambers (20, 21, 22) in order to carry out installation work and inserted into the central opening (17, 18, 19).

2. Cable insertion device according to Claim 1, **characterized in that** the pressure element (13) has a multi-component design, comprising at least one pressure plate (14), one pressure plug (15) and one pressure nut (16).

3. Cable insertion device according to Claim 1 or 2, **characterized in that** a pressure plug (15) of the pressure element (13) can be introduced into the central opening (17, 18, 19) of the pressure plate (14), sealing element (12) and preferably also base element (11).

4. Cable insertion device according to one or more of Claims 2 to 4, **characterized in that** an internal thread which interacts with an outer thread which is assigned to the base element (11) is assigned to the pressure nut (16) of the pressure element (13).

5. Cable insertion device according to Claim 4, **characterized in that** the pressure nut (16) of the pressure element (13) can be screwed to the base element (11) in such a way that as the screwing progresses the pressure plug (15) exerts an increasing pressure on the sealing element (12) via the pressure plate (14) so that the sealing element (12) is deformed and in this way brings about sealing of the cable insertion device and pressure relief of the optical fibre cables.

6. Cable insertion device according to one or more of Claims 1 to 5, **characterized in that** the base element (11) has, on an inner wall, recesses (24) in which, in the installed state, the pressure plate (14) of the pressure element (13) engages in order to provide anti-rotation with corresponding projections (23), wherein, in the installed state, the sealing element (12) is positioned between the base element (11) and the pressure plate (14).

7. Cable insertion device according to one or more of Claims 1 to 6, **characterized in that** the pressure plate (14) of the pressure element (13) has recesses (26) into which, in the installed state, the pressure plug (15) of the pressure element (13) engages with corresponding projections (25) in order to provide anti-rotation protection.

8. Cable insertion device according to one or more of Claims 1 to 7, **characterized in that**, in the installed state, the pressure plug (15) and the pressure nut (16) release the chambers (17, 18, 19) which are bounded by the base element (11), the sealing element (12) and the pressure plate (14), in such a way that the optical fibre cables (17) which are held in the chambers (17, 18, 19) can be led laterally past the pressure plug (15).

9. Distributor device of optical fibre cables or for optical waveguides which are guided in the optical fibre cables, in particular wall distributors, having at least one cable insertion device, in order to insert optical fibre cables with waveguides guided therein into the distributor device and/or lead them out of it, **characterized in that** the cable insertion device (10), or each cable insertion device (10), is embodied according to one or more of Claims 1 to 8.

## Revendications

1. Dispositif d'entrée de câble d'un dispositif de répartition pour des câbles à fibres optiques pour introduire dans le dispositif de répartition des câbles à fibres optiques dans lesquels passent des fibres optiques ou pour les faire sortir de celui-ci, présentant une structure en plusieurs parties comprenant au moins un corps de base (11), corps d'étanchéité (12) et un corps de compression (13), le corps de base (11) et le corps d'étanchéité (12) et le corps de compression (13) étant disposés dans le sens axial et étant configurés de telle sorte que plusieurs câbles à fibres optiques (27) peuvent être manipulés indépendamment les uns des autres dans le dispositif d'entrée de câble de telle sorte qu'une manipulation de l'un des câbles à fibres optiques n'influence pas les autres câbles à fibres optiques, **caractérisé en ce que** le corps de base (11) et le corps d'étanchéité (12) et un disque de compression (14) du corps de compression (13) présentent respectivement une ouverture centrale (17, 18, 19) et que le corps de base (11) et le corps d'étanchéité (12) et le disque de compression (14) présentent dans le sens radial vers l'extérieur, plusieurs chambres (20, 21, 22) de type fente qui viennent se rattacher à l'ouverture (17, 18, 19) correspondante pour recevoir à chaque fois un câble à fibres optiques (27), les chambres (20, 21, 22) débouchant dans l'ouverture centrale (17, 18, 19) de sorte que les câbles à fibres optiques (27) accueillis dans les chambres (20, 21, 22) puissent être sortis individuellement des chambres (20, 21, 22) et introduits dans l'ouverture centrale (17, 18, 19) en vue de réaliser les travaux d'installation.

2. Dispositif d'entrée de câble selon la revendication 1, **caractérisé en ce que** le corps de compression (13) présente une structure en plusieurs parties, comprenant au moins un disque de compression (14), un bouchon de compression (15) et un écrou de compression (16).

3. Dispositif d'entrée de câble selon la revendication 1 ou 2, **caractérisé en ce qu'**un bouchon de compression (15) du corps de compression (13) peut être introduit dans l'ouverture centrale (17, 18, 19) du disque de compression (14), du corps d'étanchéité (12) et de préférence aussi du corps de base (11).

4. Dispositif d'entrée de câble selon une ou plusieurs des revendications 2 à 4, **caractérisé en ce qu'**à l'écrou de compression (16) du corps de compression (13) est associé un taraudage qui agit conjointement avec un filetage associé au corps de base (11).

5. Dispositif d'entrée de câble selon la revendication 4, **caractérisé en ce que** l'écrou de compression (16) du corps de compression (13) peut être vissé avec le corps de base (11) de telle sorte que lorsque le vissage augmente, le bouchon de compression (15) exerce par le biais du disque de compression (14) une pression croissante sur le corps d'étanchéité (12) de sorte que le corps d'étanchéité (12) soit déformé et réalise ainsi une étanchéité du dispositif d'entrée de câble et un soulagement de la traction sur le câble à fibres optiques.

6. Dispositif d'entrée de câble selon une ou plusieurs des revendications 1 à 5, **caractérisé en ce que** le corps de base (11) présente sur une paroi intérieure des creux (24) dans lesquels, en position assemblée, le disque de compression (14) du corps de compression (13) pénètre avec des parties en saillie (23) correspondantes pour réaliser une protection anti-torsion, en position assemblée le corps d'étanchéité (12) étant positionné entre le corps de base (11) et le disque de compression (14).

7. Dispositif d'entrée de câble selon une ou plusieurs des revendications 1 à 6, **caractérisé en ce que** le disque de compression (14) du corps de compression (13) présente des creux (26) dans lesquels, en position assemblée, le bouchon de compression (15) du corps de compression (13) pénètre avec des parties en saillie (25) correspondantes pour réaliser une protection anti-torsion.

8. Dispositif d'entrée de câble selon une ou plusieurs des revendications 1 à 7, **caractérisé en ce qu'**en position assemblée, le bouchon de compression (15) et l'écrou de compression (16) libèrent les chambres (17, 18, 19) délimitées par le corps de base (11), le corps d'étanchéité (12) et le disque de compression (14) de telle sorte que les câbles à fibres optiques (17) accueillis dans les chambres (17, 18, 19) puissent être transférés latéralement à côté du bouchon de compression (15).

9. Dispositif de répartition pour des câbles à fibres optiques ou pour des fibres optiques qui passent dans des câbles à fibres optiques, notamment répartiteur mural, comprenant au moins un dispositif d'entrée de câble, pour introduire dans le dispositif de répartition des câbles à fibres optiques dans lesquels passent des fibres optiques ou pour les faire sortir de celui-ci, **caractérisé en ce que** le ou chaque dispositif d'entrée de câble (10) est réalisé selon une ou plusieurs des revendications 1 à 8.
